# EUROPÄISCHE PATENTSCHRIFT

(11) **EP 3 804 493 B1**
(45) Veröffentlichungstag und Bekanntmachung des Hinweises auf die Patenterteilung: **01.03.2023**
(21) Anmeldenummer: 20200842.1
(22) Anmeldetag: 08.10.2020
(51) Int. Cl.: A01D 75/20, A01B 73/04, A01D 34/66

(54) **MÄHWERK MIT EINER SCHUTZVORRICHTUNG UND ARBEITSZUG MIT DEM MÄHWERK**
MOWING DEVICE WITH A PROTECTIVE DEVICE AND WORK TRAIN WITH THE MOWING DEVICE
FAUCHEUSE DOTÉE D'UN DISPOSITIF DE PROTECTION ET ENGIN DE TRAVAUX DOTÉ D'UNE TELLE FAUCHEUSE

(30) Priorität: 11.10.2019 DE 102019007072
(43) Veröffentlichungstag der Anmeldung: 14.04.2021
(73) Patentinhaber: Maschinenfabrik Bernard Krone GmbH & Co. KG, 48480 Spelle (DE)
(72) Erfinder: Landwehr, Stefan, 49740 Haselünne (DE); Grothe, Hendrik, 49716 Meppen (DE); Lömker, Jens, 48496 Hopsten (DE)

(56) Entgegenhaltungen:
- EP-A1- 0 558 431
- EP-A1- 3 391 723
- WO-A1-2015/170045
- DE-T2- 69 519 910

## Beschreibung

Die vorliegende Erfindung betrifft ein Mähwerk mit einer Schutzvorrichtung, die in einem Betrieb des Mähwerks einen Arbeitsraum begrenzt, in dem ein Mähorgan bodenkopierend geführt ist, wobei die Schutzvorrichtung ein Seitenelement mit einer Verstellmechanik umfasst, die einen Randbügel aufweist, der von einer im Betrieb des Mähwerks vorgesehenen Betriebsposition in eine während eines Straßentransports des Mähwerks vorgesehene Transportposition verstellbar ist, wobei an dem Randbügel ein Schutztuch angeordnet ist, das in der Transportposition gegenüber der Betriebsposition angehoben ist. Die vorliegende Erfindung betrifft zudem einen Arbeitszug mit einem Arbeitsfahrzeug und einem solchen Mähwerk.

Zum Schutz von Personen gegen aufgewirbeltes Erntegut und Steine sowie als Zugriffsschutz weisen Mähwerke regelmäßig eine Schutzvorrichtung auf. Die Schutzvorrichtung umfasst Schutztücher, die einen Arbeitsraum des Mähwerks, in dem die Mähorgane des Mähwerks angeordnet sind, an einer Oberseite sowie vollumfänglich begrenzen. Gemäß Sicherheitsrichtlinien müssen die Schutztücher einen Mindestabstand zu den Mähorganen einhalten.

Um ein Feld möglichst wirtschaftlich zu bearbeiten, werden Mähwerke immer breiter gebaut. Dadurch überschreitet ihre Breite beim Straßentransport oftmals die maximal zulässige Fahrzeugbreite.

Die Druckschrift EP 3 391 723 A1 offenbart ein Mähwerk, das seitliche Schutzabdeckungen aufweist, die zusammen mit seitlichen Schutztüchern von einer Arbeitsstellung in eine Transportstellung verlagerbar sind. Zudem weist das Mähwerk Spanneinrichtungen auf, über die die seitlichen Schutztücher in der Transportstellung spannbar sind. Dadurch kann ein Flattern der Schutztücher bei einer Fahrt in Transportstellung vermieden werden. Die Spanneinrichtungen umfassen ein Zugband, das zum Spannen der Schutzabdeckung gezogen wird. Das Schutztuch wird dabei sehr ungleichmäßig gefaltet und geknittert. Zudem kann das Zugband, insbesondere auch während einer Straßenfahrt, reißen.

Aufgabe der Erfindung ist es, ein alternatives Mähwerk vorzuschlagen, bei dem ein Flattern des seitlichen Schutztuchs in Transportstellung sicher vermieden wird.

Die Aufgabe wird gelöst mit einem Mähwerk mit den Merkmalen des unabhängigen Patentanspruchs 1 sowie mit einem Arbeitszug mit den Merkmalen des unabhängigen Patentanspruchs 12. Vorteilhafte Ausführungsformen sind den abhängigen Ansprüchen entnehmbar.

Dafür wird ein Mähwerk geschaffen. Das Mähwerk weist eine Schutzvorrichtung auf, die in einem Betrieb des Mähwerks einen Arbeitsraum begrenzt, in dem ein Mähorgan bodenkopierend geführt ist. Die Schutzvorrichtung ist dafür vorgesehen, den durch das Mähorgan verursachten Flug von Erntegut, aber auch Sand und Steinen, räumlich auf den Arbeitsraum zu begrenzen. Dafür ist sie gemäß vorgegebenen Richtlinien von den Mähorganen beabstandet.

Die Schutzvorrichtung umfasst ein Seitenelement mit einer Verstellmechanik, die einen Randbügel aufweist. Das Seitenelement kann an einem Ende des Mähwerks angeordnet sein. In einer bevorzugten Ausführungsform weist die Schutzvorrichtung zwei solche Seitenelemente auf. Die Seitenelemente sind bevorzugt an gegenüberliegenden Enden des Mähwerks angeordnet.

Dabei ist der Randbügel von einer im Betrieb des Mähwerks vorgesehenen Betriebsposition in eine während eines Straßentransports des Mähwerks vorgesehene Transportposition verstellbar. Dadurch kann eine Breite des Mähwerks verringert werden, so dass das Mähwerk die maximal zulässige Fahrzeugbreite nicht überschreitet. Vorzugsweise ermöglicht das Verstellen beider Seitenelemente eine Verringerung der Breite des Mähwerks auf etwa die Breite des Mähorgans.

An dem Randbügel ist ein Schutztuch angeordnet. Das Schutztuch hängt vom Randbügel ausgehend zum Boden hin ab. Dadurch erstreckt es sich dort etwa in eine Verstellrichtung, insbesondere eine vertikale Richtung. Das Verstellen des Randbügels bewirkt, dass das Schutztuch in der Transportposition gegenüber der Betriebsposition angehoben ist.

Das Mähwerk zeichnet sich dadurch aus, dass die Verstellmechanik zudem einen Haltebügel umfasst und dazu eingerichtet ist, den Haltebügel beim Verstellen des Randbügels von der Betriebsposition in die Transportposition von einer vom Schutztuch beabstandeten Grundposition in eine an diesem anliegende Halteposition zu verstellen.

Außerdem zeichnet sich das Mähwerk dadurch aus, dass sich der Haltebügel in der Halteposition an das Schutztuch anlegt, so dass das Schutztuch beim Straßentransport nicht mehr hin und her flattern kann.

Dabei wird das Schutztuch so angehoben, dass es nicht vielfältig gefaltet und dadurch geknittert wird. Zudem kann ein solcher Haltebügel auch nicht reißen.

Um ein Verstellen des Haltebügels beim Verstellen des Randbügels zu ermöglichen, ist es bevorzugt, dass der Haltebügel am Randbügel angeordnet ist. In einer bevorzugten Ausführungsform werden der Randbügel und der Haltebügel zum Verstellen des Randbügels von der Betriebsposition in die Transportposition und/oder zum Verstellen des Haltebügels von der Grundposition in die Halteposition verschwenkt. Dabei ist es bevorzugt, dass der Randbügel und der Haltebügel um zueinander parallele Achsen verschwenkt werden. Vorzugsweise erstreckt sich eine Schwenkachse, um die der Randbügel verschwenkt wird, in eine Schwenkrichtung, in die er sich in der Betriebsposition erstreckt, insbesondere in eine Längsrichtung des Mähwerks. Der Randbügel und/oder der Haltebügel können aber auch durch ein Verschieben oder eine Kombination aus einem Verschieben und einem Verschwenken verstellt werden. Daher ist auch eine Verstellmechanik bevorzugt, bei der der Randbügel verschwenkt und der Haltebügel verschoben und/oder verschwenkt wird, oder bei der umgekehrt der Haltebügel verschwenkt wird und der Randbügel verschoben und/oder verschwenkt wird.

Der Randbügel erstreckt sich in der Betriebsposition bevorzugt in einer Ebene, die durch die Längsrichtung und eine Querrichtung, in der sich das Mähwerk erstreckt, aufgespannt ist. Weiterhin bevorzugt erstreckt er sich in der Transportposition im Wesentlichen quer zu der Ebene.

Weiterhin bevorzugt erstreckt sich der Haltebügel in der Grundposition in einer Verstellrichtung, die sich quer zur Längsrichtung und zur Querrichtung erstreckt, unterhalb des Randbügels. In der Halteposition erstreckt er sich im Wesentlichen quer zu der Ebene.

In einer bevorzugten Ausführungsform wird der Haltebügel dafür beim Verstellen von der Grundposition in die Halteposition in eine Drehrichtung verschwenkt, die der Schwenkrichtung, in der der Randbügel beim Verstellen von der Arbeitsposition in die Transportposition verschwenkt wird, entgegen gerichtet ist. Dadurch ist der Haltebügel in der Halteposition bodennäher angeordnet als in der Grundposition. Das Schutztuch wird daher in der Halteposition an einem bodennahen Ende vom Haltebügel gehalten.

Um dem Schutztuch während des Straßentransports mehr Stabilität zu verleihen, kann zwischen dem Randbügel und dem Haltebügel zusätzlich ein Halteband vorgesehen sein, das sich in der Transportposition zwischen dem Randbügel und dem Haltebügel erstreckt. Das Halteband kann dehnbar ausgebildet sein, insbesondere als Gummiband, so dass es in der Transportposition zwischen dem Randbügel und dem Haltebügel aufgespannt ist.

Um ein gleichmäßiges Anheben des Schutztuchs zu ermöglichen, erstreckt sich der Randbügel bevorzugt über eine gesamte Länge des Mähwerks. Dadurch fällt das Schutztuch beim Anheben und in der Transportposition nahezu glatt ab. Das Schutztuch ist in der Transportposition daher zumindest nicht wesentlich oder sogar gar nicht gefaltet. Indem auch der Haltebügel sich über die gesamte Länge des Mähwerks erstreckt, kann er sich an das im Wesentlichen glatt abfallende Schutztuch anlegen, so dass das Schutztuch auch durch den Haltebügel zumindest nicht Wesentlich oder sogar gar nicht gefaltet oder geknittert wird.

Dafür weist der Randbügel zwei freie Enden auf, die um die Schwenkachse in und gegen die Schwenkrichtung schwenkbar vorgesehen sind. Die freien Enden des Randbügels sind bevorzugt in einer Entfernung zueinander angeordnet, die einer Länge der Schutzvorrichtung entspricht. In dieser Ausführungsform kann sich das Schutztuch zwischen seinen freien Enden im Wesentlichen entlang des gesamten Randbügels erstrecken. Der Arbeitsraum kann daher trotz der verstellbaren Seitenelemente im Wesentlichen vollumfänglich umschlossen werden.

Dabei können die freien Enden des Randbügels durch einen Verbindungsarm miteinander verbunden sein, der um die Schwenkachse drehbar am Rahmen des Mähwerks gelagert ist. Der Verbindungsarm verleiht dem Seitenelement und/oder dem Randbügel Stabilität. Zudem kann die Verschwenkbarkeit des Randbügels so durch herkömmliche Drehlager hergestellt werden, mit denen der Verbindungsarm am Rahmen des Mähwerks gelagert ist.

Der Haltebügel ist dabei bevorzugt in einem ersten und einem zweiten Anlenkpunkt, die jeweils in einem Abstand zum freien Ende des Randbügels angeordnet sind, in und gegen die Drehrichtung drehbar am Randbügel befestigt. Eine solche Befestigung ist beispielsweise mittels Bolzen sehr kostengünstig möglich.

Um das Drehen des Haltebügels in die der Schwenkrichtung des Randbügels entgegen gesetzte Drehrichtung zu ermöglichen, ist es bevorzugt, dass der erste Anlenkpunkt des Haltebügels an den Randbügel an einem ersten freien Ende des Haltebügels angeordnet ist, und dass ein zweites freies Ende des Haltebügels gegenüber dem zweiten Anlenkpunkt um eine Verlängerung des Haltebügels versetzt angeordnet ist. Die Verlängerung dient als Betätigung für den Haltebügel.

Um diese zu betätigen, weist der Rahmen vorzugsweise einen Ausleger mit einem offenen Ende auf, wobei die Verstellmechanik eine Strebe umfasst, die sich zwischen dem offenen Ende des Auslegers und dem zweiten freien Ende des Haltebügels erstreckt. Die Strebe ist dabei bevorzugt an dem offenen Ende des Auslegers und dem zweiten freien Ende des Haltebügels jeweils drehbar befestigt. Beim Verschwenken des Randbügels behält das zweite freie Ende des Haltebügels seinen der Länge der Strebe entsprechenden Strebenabstand bei. Das zweite freie Ende des Haltebügels wird dabei daher entlang eines Kreises mit dem Radius der Länge der Strebe verschwenkt. Dabei dreht sich der Haltebügel von der Grundposition in die Halteposition oder zurück.

Um den Randbügel zu verschwenken, ist es zudem bevorzugt, dass am Verbindungsarm ein Hebel festgelegt ist. In einer besonders bevorzugten Ausführungsform erstreckt sich der Hebel von einem etwa mittig des Randbügels befestigten zweiten Ende über einen etwa mittig des Verbindungsarms vorgesehene Befestigung zu einem ersten, offenen Ende des Hebels. Dabei wird der Hebel bevorzugt an seinem ersten, offenen Ende betätigt. Da sich der Hebel etwa mittig zwischen dem Randbügel und dem Verbindungsarm erstreckt, verleiht er dem Randbügel weitere Stabilität.

Der Hebel ist bevorzugt mit einem Aktor automatisch betätigbar. Dafür ist ein hydraulischer oder elektrohydraulischer Zylinder bevorzugt. Prinzipiell kann aber auch ein elektrischer Aktor wie beispielsweise ein Linearmotor vorgesehen sein. Alternativ oder zusätzlich kann der Hebel auch manuell betätigbar sein.

Die Aufgabe wird weiterhin gelöst mit einer selbstfahrenden Mähmaschine mit einem solchen Mähwerk. Das Mähwerk einer solchen Mähmaschine kann frontseitig, heckseitig oder in einem Achszwischenraum angeordnet sein. Dann ist es bevorzugt, dass die Mähmaschine eine Steuerung zum Steuern des Mähwerks umfasst, die zum Verstellen des Aktors vorgesehen ist, sowie eine Benutzerschnittstelle, die ein Betätigungsmittel für einen Bediener, beispielsweise einen Schalter, umfasst, die zum Aktivieren der Verstellung des Aktors vorgesehen ist. Dabei ist die Benutzerschnittstelle bevorzugt in einer Fahrerkabine angeordnet. Dadurch muss der Bediener die Fahrerkabine zum Überführen des Seitenelements von der Betriebsposition in die Transportposition oder zurück nicht verlassen.

Die Aufgabe wird weiterhin gelöst mit einem Arbeitszug mit einem Arbeitsfahrzeug und einem solchen Mähwerk. Ein solches Arbeitsfahrzeug kann ein Traktor oder ein Schlepper sein, an den das Mähwerk angehängt ist. Auch an eine selbstfahrende Mähmaschine, die bereits ein solches Mähwerk umfasst, kann zudem ein weiteres solches Mähwerk angehängt sein. Dabei kann das Mähwerk als gezogenes Mähwerk ausgebildet sein. Es kann aber auch als Frontmähwerk frontseitig oder als Heckmähwerk heckseitig am Arbeitsfahrzeug befestigt sein.

Der Arbeitszug zeichnet sich dadurch aus, dass im Arbeitsfahrzeug die Benutzerschnittstelle mit dem Betätigungsmittel zum Aktivieren der Verstellung des Aktors vorgesehen ist. Auch in dieser Ausführungsform muss der Bediener die Fahrerkabine zum Überführen des Seitenelements von der Betriebsposition in die Transportposition oder zurück nicht verlassen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: ein erfindungsgemäßes Mähwerk mit einer Schutzvorrichtung, die an gegenüberliegenden Seiten jeweils ein Seitenelement mit einer Verstellmechanik umfasst, die einen Randbügel aufweist;
- Fig. 2: in (a) und (b) jeweils das Mähwerk der Fig. 1, wobei der Randbügel eines der Seitenelemente in einer Betriebsposition, und der Randbügel des anderen Seitenelements in einer Transportposition angeordnet ist;
- Fig. 3: einen Ausschnitt aus dem Mähwerk der Fig. 1; und
- Fig. 4: die Verstellmechanik eines der Seitenelemente der Fig. 1, wobei der Randbügel in (a) in der Betriebsposition angeordnet ist, und wobei der Randbügel in (b) in einer Zwischenposition dargestellt ist, die er beim Verstellen von der Betriebsposition in die Transportposition oder zurück einnimmt.

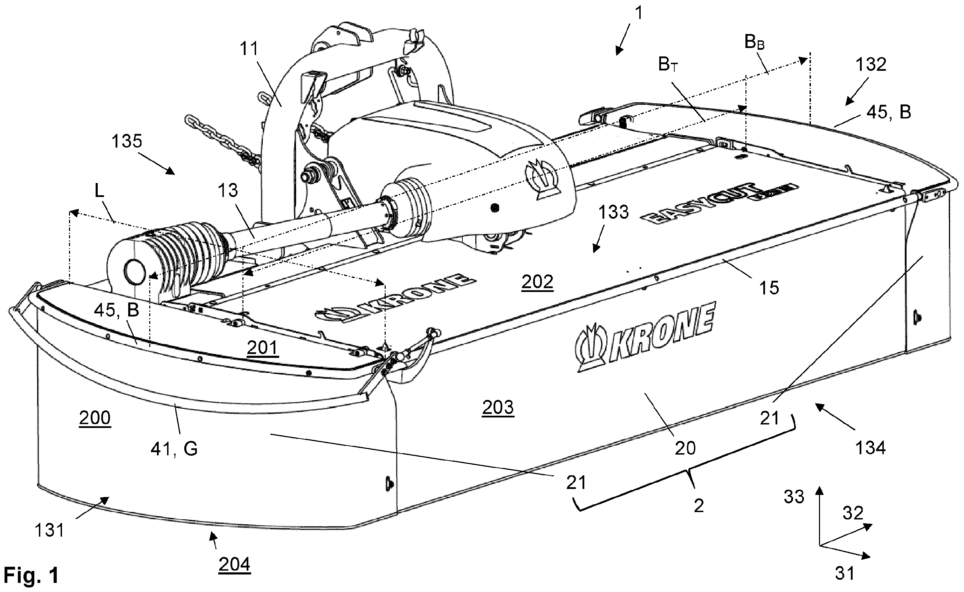

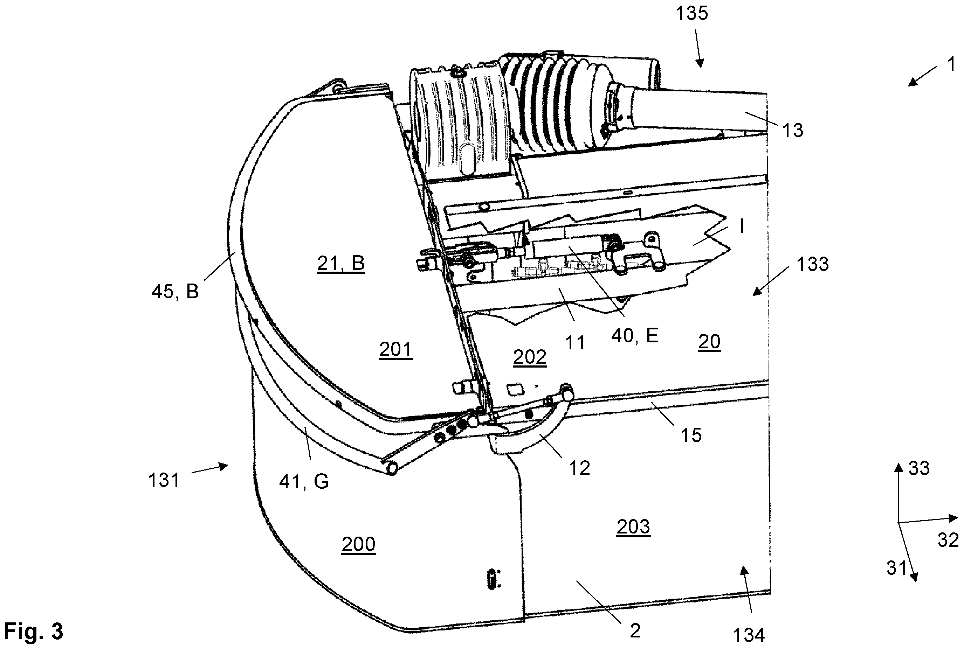

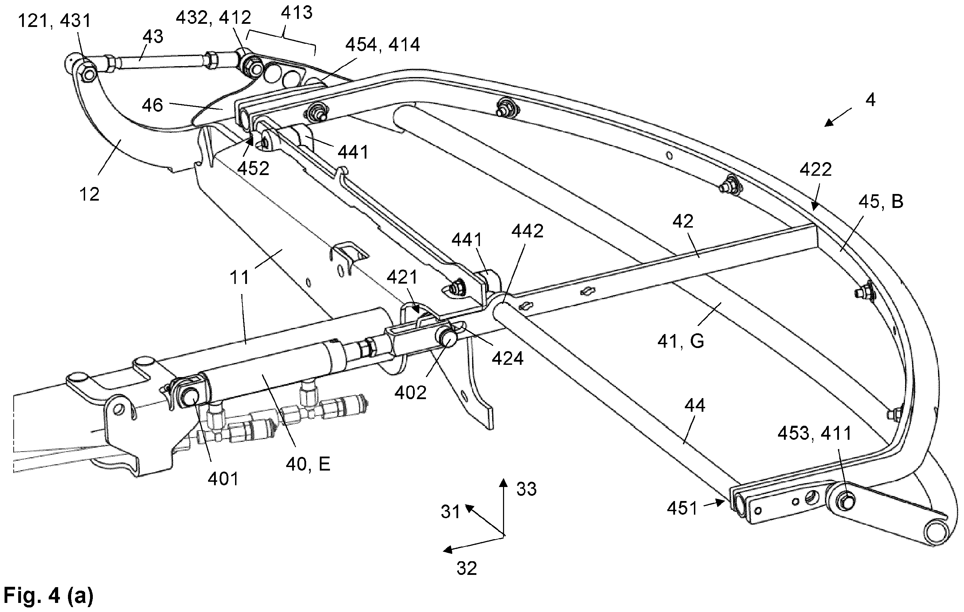

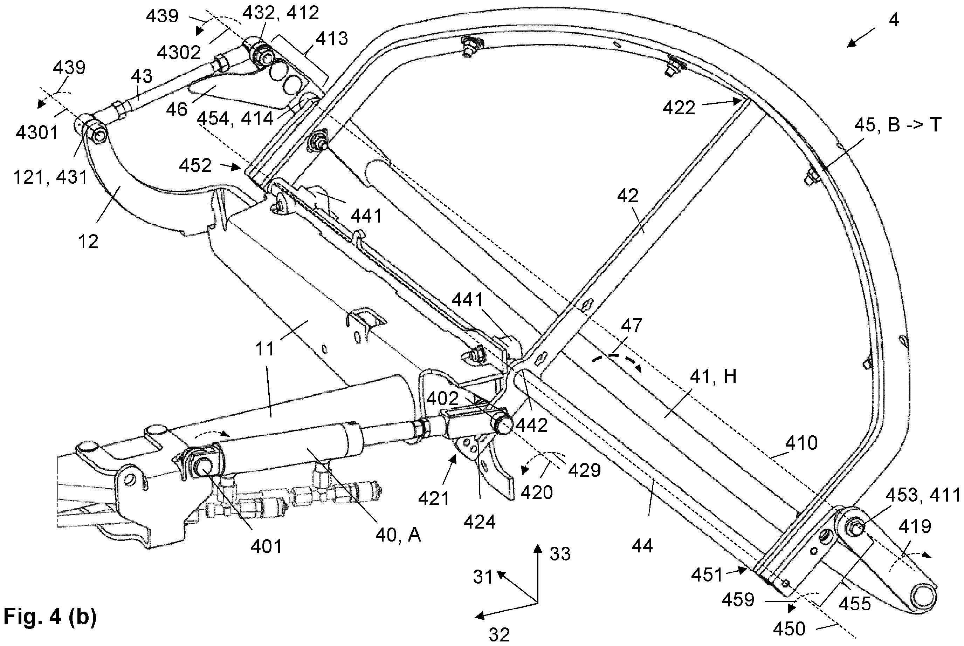

Fig. 1 zeigt ein erfindungsgemäßes Mähwerk 1. Es handelt sich hier um ein Frontmähwerk, das an eine Frontseite eines Arbeitsfahrzeugs (nicht gezeigt) wie beispielsweise einen Traktor oder Schlepper anhängbar ist. Dafür weist das Mähwerk 1 einen Rahmen 11 (s. Fig. 3, 4) auf, der an einer Rückseite 135 des Mähwerks 1 an dem Arbeitsfahrzeug lösbar befestigbar ist.

Das Mähwerk 1 weist eine Schutzvorrichtung 2 auf. Die Schutzvorrichtung 2 begrenzt in einem Betrieb des Mähwerks 1 einen Arbeitsraum 130, in dem ein Mähorgan 14 angeordnet ist. Das Mähorgan 14 ist zum Mähen von Erntegut vorgesehen. Dafür wird es im Betrieb des Mähwerks 1 bodenkopierend geführt. Es ist hier als Mähholm (nicht bezeichnet) ausgebildet, an dem eine Vielzahl Messer (nicht bezeichnet) angeordnet sind, die im Betrieb des Mähwerks 1 jeweils rotierend angetrieben sind. Ein solches Mähorgan 14 kann aber auch relativ zu einer Gegenschneide (nicht gezeigt) verschobene Klingen (nicht gezeigt) aufweisen. Es kann auch eine andere Ausbildung aufweisen. Wesentlich ist, dass das Mähorgan 1 zum Schneiden oder Scheren von Erntegut wie beispielsweise Heu oder Stroh ausgebildet ist.

Zum Antrieb des Mähorgans 14 weist das Mähwerk 1 eine Antriebswelle 13 auf. Die Antriebswelle 13 ist an eine Zapfwelle (nicht gezeigt) des Arbeitsfahrzeugs anschließbar.

Die Schutzvorrichtung 2 ist dafür vorgesehen, den durch das Mähorgan 14 verursachten Flug von Erntegut, Sand und/oder Steinen räumlich auf den Arbeitsraum 130 zu begrenzen. Dafür weist sie mehrere Schutztücher 200, 201, 202 auf, die den Arbeitsraum 130 oberhalb des Bodens (nicht dargestellt) umgeben.

Lediglich bodenseitig ist der Arbeitsraum 130 nicht durch die Schutzvorrichtung 2 begrenzt.

Zumindest ein mittleres Schutztuch 202 erstreckt sich entlang einer Oberseite 133 über einen Mittelteil 20 der Schutzvorrichtung 2. Dafür ist das mittlere Schutztuch 202 ausgehend von einem an einer Stirnseite 134 des Mähwerks 1 vorgesehenen umlaufenden Schutzrohr 15 entlang einer Oberseite 133 bis zu einem an der Rückseite 135 vorgesehenen umlaufenden Schutzrohr 15 gespannt. Dabei erstreckt sich die Oberseite 133 über eine gesamte Länge L des Mähwerks 1. Vom stirnseitigen und rückseitigen umlaufenden Schutzrohr 15 ausgehend hängt zudem jeweils ein Schutztuch 203 vom umlaufenden Schutzrohr 15 aus zum Boden hinab, so dass es sich dort jeweils im Wesentlichen in eine Verstellrichtung 33 erstreckt. Die Schutztücher 202, 203 des Mittelteils 20 können auch miteinander verbunden oder einstückig gefertigt sein.

An gegenüberliegenden Seiten131, 132 des Mähwerks 1 weist die Schutzvorrichtung 2 zudem jeweils ein Seitenelement 21 auf. Die Seitenelemente 21 sind jeweils an einer Seite 131, 132 des Mähorgans 14 angeordnet. Bei einem Mähorgan 14, das einen Mähholm umfasst, der sich in eine Querrichtung 32, insbesondere quer zu einer Längs- oder Fahrtrichtung 31, erstreckt, sind sie endseitig des Mähholms angeordnet. Dabei sind sie im Betriebszustand B vom Mähholm beabstandet. Im Transportzustand T können sie auch oberhalb des Mähholms angeordnet sein.

Für jedes der Seitenelemente 21 ist wenigstens ein weiteres Schutztuch 200 vorgesehen. Dieses Schutztuch 200 hängt vom Randbügel 45 ausgehend auf den Boden hinab, so dass es sich jeweils im Wesentlichen in die Verstellrichtung 33 erstreckt. Das Seitenelement 21 umfasst zudem ein weiteres Schutztuch 201, das sich an der Oberseite 133 vom Randbügel 45 ausgehend zum mittleren Schutztuch 202 erstreckt und dort gespannt ist. Prinzipiell können die Schutztücher 200, 201 des Seitenelementes 21 auch miteinander verbunden oder einstückig gefertigt sein.

Die Seitenelemente 21 weisen außerdem jeweils eine Verstellmechanik 4 auf, wobei der Randbügel 45 der Seitenelemente 21 ein Bestandteil der Verstellmechanik 4 ist.

Um eine Breite B_{B}, B_{T} des Mähwerks 1 für einen Straßentransport zu verringern, sind die Randbügel 45 der Seitenelemente 21 von einer Betriebsposition B, in der sie im Betrieb des Mähwerks 1 angeordnet sind, in eine während eines Straßentransports des Mähwerks 1 vorgesehene Transportposition T verstellbar. In

Fig. 1 sind beide Seitenelemente 21 in der Betriebsposition B gezeigt. Das Mähwerk nimmt dann eine Betriebsbreite B_{B} ein. Wenn die Randbügel 45 beider Seitenelemente 21 in der Transportposition T angeordnet sind, überschreitet die Breite des Mähwerks 1 eine für eine Straßenfahrt zulässige Fahrzeugbreite nicht. Das Mähwerk nimmt dann eine Transportbreite B_{T} ein.

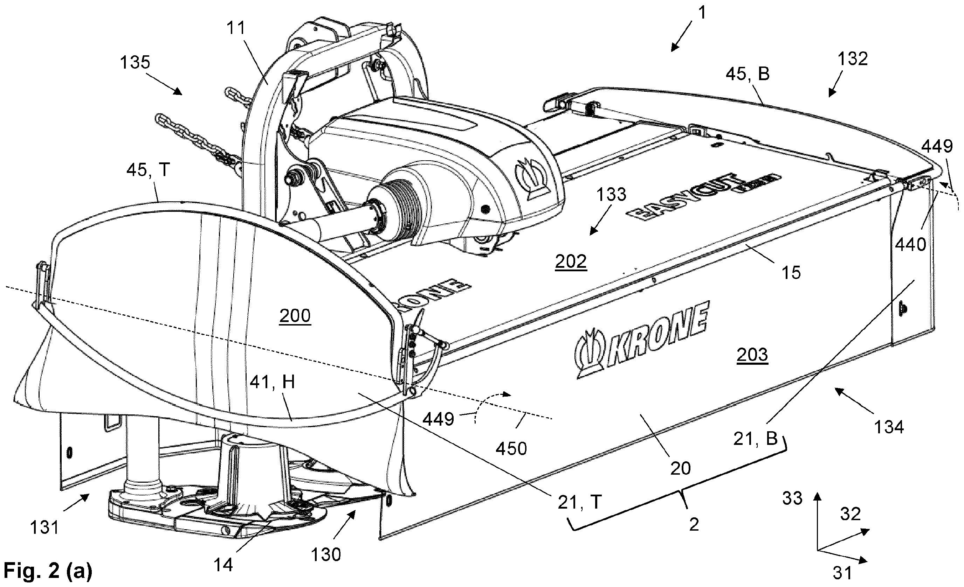

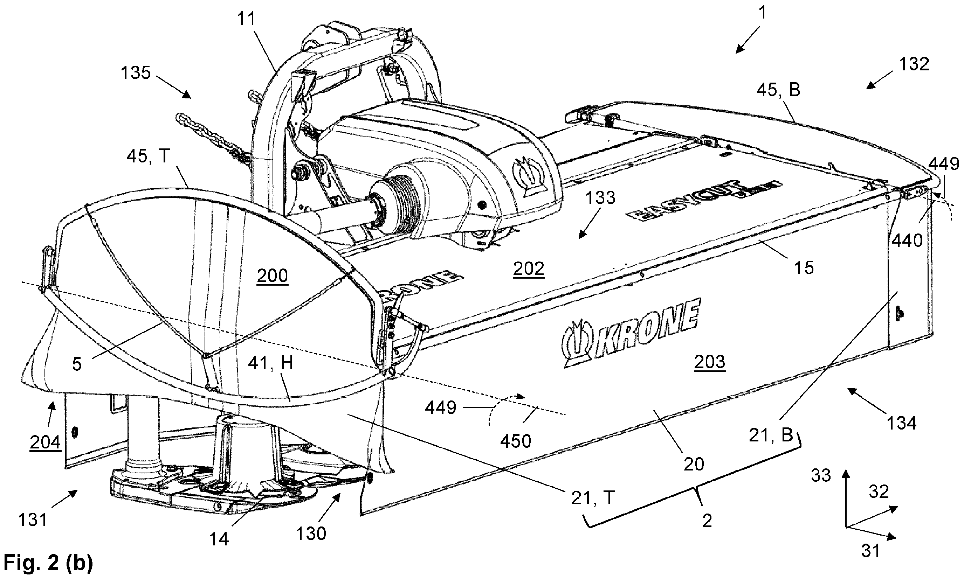

Fig. 2 zeigt das Mähwerk 1 der Fig. 1, wobei ein erstes der beiden Seitenelemente 21 in der Betriebsposition B und ein zweites der beiden Seitenelemente 21 in der Transportposition T gezeigt sind. Die beiden Ausführungsformen unterscheiden sich lediglich darin, dass zwischen dem Randbügel 45 und einem Haltebügel 41 der Verstellmechanik 4 der Ausführungsform der Fig. 2 (b) ein Halteband 5 angeordnet ist, das bei der Ausführungsform der Fig. 2 (a) nicht vorgesehen ist.

Das Verstellen des Randbügels 45 von der Betriebsposition B in die Transportposition T wird im Folgenden anhand des ersten Seitenelements 21 beschrieben. Die Ausführungen gelten in analoger Weise auch für das zweite Seitenelement 21.

Das Verstellen des Randbügels 45 von der Betriebsposition B in die Transportposition T bewirkt, dass zumindest das Schutztuch 200 des Seitenelements 21, welches vom Randbügel 45 ausgehend zum Boden hin abhängt, in der Transportposition T gegenüber der Betriebsposition B angehoben ist. Die folgenden Ausführungen beziehen sich auf dieses Schutztuch 200.

Beim Verstellen des Randbügels 45 von der Betriebsposition B in die Transportposition T verstellt sich der Haltebügel 41 von einer vom Schutztuch 200 beabstandeten Grundposition G in eine an diesem anliegende Halteposition H. Da sich der Haltebügel 41 in der Halteposition H an das Schutztuch 200 anlegt, kann das Schutztuch 200 beim Straßentransport nicht mehr hin und her flattern. Da das Schutztuch 200 dabei lediglich angehoben wird, wird es zudem nicht vielfältig gefaltet. Beim Zurückführen des Randbügels 45 von der Transportposition T in die Betriebsposition B muss es daher auch nicht aufwändig entfaltet werden.

Das in der Ausführungsform der Fig. 2 (b) vorgesehene Halteband 5 ist bevorzugt als ein Gummiband ausgebildet, so dass es sich in der Transportposition T zwischen dem Randbügel 45 und dem Haltebügel 41 spannt. Dadurch stabilisiert es das Schutztuch 200 während des Straßentransports.

In Fig. 3 ist das sich entlang der Oberseite 133 erstreckende mittlere Schutztuch 202 an seinem dem ersten Seitenelement 21 zugewandten Ende (nicht bezeichnet) teilweise ausgespart. Die Aussparung ist mit dem Bezugszeichen I gekennzeichnet. Dadurch ist ein Aktor 40 sichtbar, mit dem der Randbügel 45 des ersten Seitenelementes 21 von der Betriebsposition B in die Transportposition T und zurück verstellbar ist.

Die Fig. 4 (a) und (b) zeigen die Verstellmechanik 4 der Schutzvorrichtung 2, sowie die Anordnung der Verstellmechanik 4 am Rahmen 11 des Mähwerks 1. Dabei zeigt die Fig. 4 (a) die Verstellmechanik 4 in der Betriebsposition B des Randbügels 45. Fig. 4 (b) zeigt den Randbügel 45 beim Verstellen von der Betriebsposition B in die Transportposition T. Dargestellt ist daher eine Zwischenposition (nicht bezeichnet) zwischen der Betriebsposition B und der Transportposition T.

Der Randbügel 45 erstreckt sich in der Betriebsposition B in einer Ebene (nicht bezeichnet), die durch die Längsrichtung 31 und die Querrichtung 32 aufgespannt ist. Er weist zwei freie Enden 451, 452 auf, die durch einen Verbindungsarm 44 miteinander verbunden sind. Der Verbindungsarm 44 ist mittels Lagern 441 drehbar am Rahmen 11 befestigt. Dadurch ist der Randbügel 45 um eine Schwenkachse 450, die sich entlang des Verbindungsarms 44 vom ersten zum zweiten Ende 451, 452 des Randbügels 45 erstreckt, in und gegen eine Schwenkrichtung 450 schwenkbar am Rahmen 11 des Mähwerks 1 gelagert. In der Transportposition T erstreckt sich der Randbügel 45 im Wesentlichen quer zu der Ebene.

Der Haltebügel 41 ist am Randbügel 45 angeordnet. Er ist etwa u- förmig ausgebildet und weist zwei am Rangbügel 45 befestigte Schenkel (nicht bezeichnet) auf, die durch eine Querverbindungsstrebe (nicht bezeichnet) miteinander verbunden sind. In der Grundposition G erstreckt sich die Querverbindungsstrebe in einer Verstellrichtung 33 unterhalb des Randbügels 45. Die Verstellrichtung 33 ist quer zur Längsrichtung 31 und quer zur Querrichtung 32 ausgerichtet. Der Haltebügel 41 wird beim Verstellen des Randbügels 45 ebenfalls verschwenkt. In der Halteposition H erstreckt er sich im Wesentlichen quer zu der Ebene.

Dafür sind am Randbügel 45 zwei Anlenkpunkte 453, 454 vorgesehen, die einen gleichen Versatz 455 zu einem der beiden freien Enden 451, 452 des Randbügels 45 aufweisen. Der Randbügel 45 ist ebenfalls etwa u- förmig ausgebildet, so dass er endseitig jeweils einen Schenkel (nicht bezeichnet) aufweist, wobei sich die Schenkel etwa parallel zueinander erstrecken. Eine fiktive Verbindungsachse, die durch die Anlenkpunkte 453, 454 führt, verläuft daher im Wesentlichen parallel zum Verbindungsarm 44. Diese Verbindungsachse dient als Drehachse 410 für den Haltebügel 41.

Aufgrund des gleichen Versatzes 455 der Anlenkpunkte 453, 454 zu den beiden Enden 451, 452 des Randbügels 45 verlaufen die Schwenkachse 450, um die der Randbügel 45 beim Verstellen von der Betriebsposition B in die Transportposition T verschwenkt wird, und die Drehachse 410, um die der Haltebügel 41 beim Verstellen von der Grundposition G in die Halteposition H verschwenkt wird, im Wesentlichen parallel zueinander.

Der Haltebügel 41 weist zwei einander gegenüber liegende Enden 411, 412 sowie einen Befestigungspunkt 414 auf, wobei der Befestigungspunkt 414 um eine Verlängerung 413 gegenüber einem zweiten seiner beiden Enden 412 angeordnet versetzt ist. An einem ersten seiner beiden Enden 411 ist er in einem ersten der beiden Anlenkpunkte 453 am Randbügel 45 drehbar befestigt. Weiterhin ist er mit seinem Befestigungspunkt 414 drehbar an einem zweiten der beiden Anlenkpunkte 454 des Randbügels 45 befestigt. Die Verlängerung 413 erstreckt sich über den Randbügel 45 hinaus bis zu dem zweiten Ende 412 des Haltebügels 41. Das zweite Ende 412 des Haltebügels 41 ist daher ein offenes Ende. Die Verlängerung 413 dient als Betätigung für den Haltebügel 41. An der Verlängerung 413 ist ein Anschlag 46 angeordnet, der das Verstellen des Haltebügels 413 beim Verschwenken von der Halteposition H in die Grundposition G begrenzt.

Um die Verlängerung 413 zu betätigen, ist am Rahmen 11 ein Ausleger 12 vorgesehen, der ein offenes Ende 121 aufweist. Das offene Ende 121 des Auslegers 12 und das zweite Ende 412 des Haltebügels 41 sind mittels einer Strebe 43 miteinander verbunden. Die Strebe 43 weist zwei freie Enden 431, 432 auf, wobei sie jeweils mit einem der beiden freien Enden 431, 432 drehbar mit dem offenen Ende 1221 des Auslegers 12 beziehungsweise dem zweiten Ende 412 des Haltebügels 41 verbunden ist. Dadurch kann sich das zweite Ende 412 des Haltebügels 41 nur entlang einer fiktiven Kreisbahn (nicht gezeigt) um das offene Ende 121 des Auslegers 12 drehen. Beim Verschwenken des Randbügels 45 von der Betriebsposition B in die Transportposition T oder zurück behält das zweite Ende 412 des Haltebügels 41 daher einen einer Strebenlänge (nicht bezeichnet) der Strebe 43 entsprechenden Strebenabstand (nicht bezeichnet) bei. Dabei dreht sich der Haltebügel 41 von der Grundposition G in die Halteposition H oder zurück.

Um den Randbügel 45 zu verschwenken, weist die Verstellmechanik 4 zudem einen Hebel 42 auf, der am Verbindungsarm 44 festgelegt ist. Der Hebel 42 ist etwa mittig am Verbindungsarm 44 befestigt und erstreckt sich strahlenförmig vom des Verbindungsarm 44 ausgehend in gegenüber liegende Längsrichtungen 31. Er weist daher zwei einander gegenüber liegende Enden 421, 422 auf, wobei er an einem zweiten seiner beiden Enden 422 am Randbügel 45 befestigt ist. Das erste seiner beiden Enden 421 ist als offenes Ende ausgebildet und zum Betätigen des Randbügels 45 vorgesehen. Es ist hier an ein kolbenseitiges Ende 402 eines Hydraulikzylinders drehbar befestigt. Der Hydraulikzylinder dient als Aktor 40 zum automatischen Betätigen des Randbügels 45. Dafür ist ein zylinderseitiges Ende 403 des Hydraulikzylinders 40 am Rahmen 11 des Mähwerks 1 befestigt. Die Begriffe Aktor 40 und Hydraulikzylinder werden im Rahmen der Fig. 4 synonym verwendet.

Fig. 4 (a) zeigt den Hydraulikzylinder 40 in einem eingezogenen Zustand E, in dem der Hebel 42 nicht betätigt ist, so dass sich der Randbügel 45 in der Betriebsposition befindet B. Fig. 4 (b) zeigt den Hydraulikzylinder 40 beim Verschwenken in die Transportposition T. Diese ist in Fig. 4 (b) noch nicht erreicht.

## Patentansprüche

1. Mähwerk (1), mit einer Schutzvorrichtung (2), die in einem Betrieb des Mähwerks (1) einen Arbeitsraum (130) begrenzt, in dem ein Mähorgan (14) bodenkopierend geführt ist, wobei die Schutzvorrichtung (2) ein Seitenelement (21) mit einer Verstellmechanik (4) umfasst, die einen Randbügel (45) aufweist, der von einer im Betrieb des Mähwerks (1) vorgesehenen Betriebsposition (B) in eine während eines Straßentransports des Mähwerks (1) vorgesehene Transportposition (T) verstellbar ist, wobei an dem Randbügel (45) ein Schutztuch (200) angeordnet ist, das vom Randbügel (45) ausgehend zum Boden hin abhängt, und das in der Transportposition (T) gegenüber der Betriebsposition (B) angehoben ist,
**dadurch gekennzeichnet, dass**
die Verstellmechanik (4) zudem einen Haltebügel (41) umfasst und dazu eingerichtet ist, den Haltebügel (41) beim Verstellen des Randbügels (45) von der Betriebsposition (B) in die Transportposition (T) von einer vom Schutztuch (200) beabstandeten Grundposition (G) in eine an diesem anliegende Halteposition (H) zu verstellen, wobei sich der Haltebügel (41) in der Halteposition (H) an das Schutztuch (200) anlegt, so dass das Schutztuch (200) beim Straßentransport nicht mehr hin und her flattern kann.

2. Mähwerk (1) nach Anspruch 1, **dadurch gekennzeichnet, dass** der Haltebügel (41) am Randbügel (45) angeordnet ist.

3. Mähwerk (1) nach einem der vorherigen Ansprüche, **dadurch gekennzeichnet, dass** der Haltebügel (41) beim Verstellen von der Grundposition (G) in die Halteposition (H) in eine Drehrichtung (419) verschwenkt wird, die einer Schwenkrichtung (459), in der der Randbügel (45) beim Verstellen von der Arbeitsposition (A) in die Transportposition (T) verschwenkt wird, entgegen gerichtet ist.

4. Mähwerk (1) nach einem der vorherigen Ansprüche, **dadurch gekennzeichnet, dass** sich der Haltebügel (41) und der Randbügel (45) über eine gesamte Länge (L) des Mähwerks (1) erstrecken.

5. Mähwerk (1) nach einem der vorherigen Ansprüche, **dadurch gekennzeichnet, dass** der Randbügel (45) zwei freie Enden (451, 452) aufweist, und dass der Haltebügel (41) in einem ersten und einem zweiten Anlenkpunkt (453, 454), die jeweils in einem Abstand (455) zu einem der freien Enden (451, 452) des Randbügels (45) angeordnet sind, in und gegen die Drehrichtung (419) drehbar am Randbügel (45) befestigt ist.

6. Mähwerk (1) nach einem der vorherigen Ansprüche, **dadurch gekennzeichnet, dass** der erste Anlenkpunkt (453) an einem freien Ende (411) des Haltebügels (41) angeordnet ist, und dass ein zweites freies Ende (412) des Haltebügels (41) gegenüber dem zweiten Anlenkpunkt (454) um eine Verlängerung (413) des Haltebügels (41) versetzt angeordnet ist.

7. Mähwerk (1) nach einem der vorherigen Ansprüche, **dadurch gekennzeichnet, dass** der Rahmen (11) einen Ausleger (12) mit einem offenen Ende (121) aufweist, und die Verstellmechanik (4) eine Strebe (43) umfasst, die sich zwischen dem offenen Ende (121) des Auslegers (12) und dem zweiten freien Ende (412) des Haltebügels (41) erstreckt und an diesen Enden (121, 412) jeweils drehbar befestigt ist.

8. Mähwerk (1) nach einem der Ansprüche 5 - 7, **dadurch gekennzeichnet, dass** die freien Enden (451, 452) des Randbügels (45) durch einen Verbindungsarm (44) miteinander verbunden sind, der um die Schwenkachse (450) drehbar am Rahmen (11) des Mähwerks (1) gelagert ist.

9. Mähwerk (1) nach Anspruch 8, **dadurch gekennzeichnet, dass** am Verbindungsarm (44) ein Hebel (42) zum Verschwenken des Randbügels (45) festgelegt ist.

10. Mähwerk (1) nach Anspruch 9, **dadurch gekennzeichnet, dass** der Hebel (42) mit einem Aktor (40) automatisch betätigbar ist.

11. Mähwerk (1) nach einem der vorherigen Ansprüche, **dadurch gekennzeichnet, dass** zwischen dem Randbügel (45) und dem Haltebügel (41) ein Halteband (5) aufgespannt ist.

12. Arbeitszug mit einem Arbeitsfahrzeug und einem Mähwerk (1) nach einem der vorherigen Ansprüche, **dadurch gekennzeichnet, dass** im Arbeitsfahrzeug ein Betätigungsmittel zum Betätigen des Aktors (40) vorgesehen ist.

## Claims

1. Mowing device (1) having a protective device (2) which, when the mowing device (1) is in operation, delimits a working space (130) in which a mowing element (14) is guided in a ground-copying manner, the protective device (2) comprising a side element (21) having an adjustment mechanism (4) which has an edge bracket (45) which can be adjusted from an operating position (B) provided during operation of the mowing device (1) into a transport position (T) provided during road transport of the mowing device (1), a protective cloth (200) being arranged on the edge bracket (45) that hangs from the edge bracket (45) towards the ground and is raised in the transport position (T) compared to the operating position (B), **characterised in that**
the adjustment mechanism (4) also comprises a holding bracket (41) and is designed to move the holding bracket (41) from a basic position (G) which is spaced apart from the protective cloth (200) into a holding position (H) abutting said protective cloth when the edge bracket (45) is adjusted from the operating position (B) into the transport position (T), the holding bracket (41) abutting the protective cloth (200) in the holding position (H) so that the protective cloth (200) can no longer flap back and forth during road transport.

2. Mowing device (1) according to claim 1, **characterised in that** the holding bracket (41) is arranged on the edge bracket (45).

3. Mowing device (1) according either of the preceding claims, **characterised in that** the holding bracket (41) is pivoted in a direction of rotation (419) when it is adjusted from the basic position (G) into the holding position (H), which direction of rotation is directed counter to a pivot direction (459) in which the edge bracket (45) is pivoted when it is adjusted from the working position (A) into the transport position (T).

4. Mowing device (1) according to any of the preceding claims, **characterised in that** the holding bracket (41) and the edge bracket (45) extend over an entire length (L) of the mowing device (1).

5. Mowing device (1) according to any of the preceding claims, **characterised in that** the edge bracket (45) has two free ends (451, 452), and **in that** the holding bracket (41) is fastened to the edge bracket (45) so that it can rotate in and counter to the direction of rotation (419) at a first and a second articulation point (453, 454) which are each arranged at a distance (455) from one of the free ends (451, 452) of the edge bracket (45).

6. Mowing device (1) according to any of the preceding claims, **characterised in that** the first articulation point (453) is arranged on a free end (411) of the holding bracket (41) and **in that** a second free end (412) of the holding bracket (41) is arranged so that it is offset relative to the second articulation point (454) by an extension (413) of the holding bracket (41).

7. Mowing device (1) according to any of the preceding claims, **characterised in that** the frame (11) has a boom (12) having an open end (121) and the adjustment mechanism (4) comprises a strut (43) which extends between the open end (121) of the boom (12) and the second free end (412) of the holding bracket (41) and is rotatably fastened to these ends (121, 412).

8. Mowing device (1) according to any of claims 5-7, **characterised in that** the free ends (451, 452) of the edge bracket (45) are connected to one another by a connecting arm (44) which is rotatably mounted on the frame (11) of the mowing device (1) about a pivot axis (450).

9. Mowing device (1) according to claim 8, **characterised in that** a lever (42) for pivoting the edge bracket (45) is fixed to the connecting arm (44).

10. Mowing device (1) according to claim 9, **characterised in that** the lever (42) can be actuated automatically using an actuator (40).

11. Mowing device (1) according to any of the preceding claims, **characterised in that** a holding strap (5) is stretched between the edge bracket (45) and the holding bracket (41).

12. Work train having a work vehicle and a mowing vehicle (1) according to any of the preceding claims, **characterised in that** an actuating means for actuating the actuator (40) is provided in the work vehicle.

## Revendications

1. Faucheuse (1) comportant un dispositif de protection (2) qui, pendant le fonctionnement de la faucheuse (1) délimite un espace de travail (130) dans lequel un organe de fauche (14) est conduit en copiant le sol,
le dispositif de protection (2) comporte un élément latéral (21) avec un mécanisme de déplacement (4), qui comprend un arceau marginal (45) déplaçable d'une position de fonctionnement (B) prévue pour le fonctionnement de la faucheuse (1) vers une position de transport (T) de la faucheuse (1) pour le transport sur route,
- l'arceau marginal (45) étant muni d'une toile de protection (200) qui est suspendue à partir de l'arceau marginal (45) vers le sol et qui, en position de transport (T) est relevé par rapport à sa position de fonctionnement (B),
faucheuse **caractérisée en ce que**
le mécanisme de déplacement (4) comporte en outre un arceau de maintien (41) et il est conçu pour qu'au déplacement de l'arceau marginal (45) de sa position de fonctionnement (B) à sa position de transport (T), déplacer l'arceau de maintien (41) d'une position de base (G) écartée de la toile de protection (200) vers une position de maintien (H) appliquée contre celle-ci,
- l'arceau de maintien (41) étant appliqué contre la toile de protection (200) en position de maintien (H) de façon que la toile de protection (200) ne flotte pas dans une direction et dans l'autre pendant le transport sur route.

2. Faucheuse (1) selon la revendication 1,
**caractérisée en ce que**
l'arceau de maintien (41) est installé sur l'arceau marginal (45).

3. Faucheuse (1) selon l'une des revendications précédentes,
**caractérisée en ce que**
lors de son passage de sa position de base (G) à sa position de maintien (H) l'arceau de maintien (41) est basculé dans un sens de rotation (419) qui est orienté à l'opposé de la direction de basculement (459) du déplacement de l'arceau marginal (45) de sa position de travail (A) à sa position de transport (T).

4. Faucheuse (1) selon l'une des revendications précédentes,
**caractérisée en ce que**
l'arceau de maintien (41) et l'arceau marginal (45) s'étendent sur toute la longueur (L) de la faucheuse (1).

5. Faucheuse (1) selon l'une des revendications précédentes,
**caractérisée en ce que**
l'arceau marginal (45) a deux extrémités libres (451, 452) et,
l'arceau de maintien (41) est relié à un premier et un second points d'articulation (453, 454) qui sont à une distance (455) de l'une des extrémités libres (451, 452) de l'arceau marginal (45) pouvant pivoter sur l'arceau marginal (45) dans le sens de rotation (419) et dans le sens opposé.

6. Faucheuse (1) selon l'une des revendications précédentes,
**caractérisée en ce que**
le premier point d'articulation (453) est prévu à l'extrémité libre (411) de l'arceau de maintien (41) et la seconde extrémité libre (412) de l'arceau de maintien (41) est décalée par rapport au second point d'articulation (454) du prolongement (413) de l'arceau de maintien (41).

7. Faucheuse (1) selon l'une des revendications précédentes, **caractérisée en ce que**
le châssis (11) comporte un bras (12) avec une extrémité ouverte (121) et le mécanisme de déplacement (4) comporte une entretoise (43) qui s'étend entre l'extrémité ouverte (121) du bras (12) et la seconde extrémité libre (412) de l'arceau de maintien (41) en étant montée à rotation à ces extrémités (121, 412).

8. Faucheuse (1) selon l'une des revendications 5 à 7,
**caractérisée en ce que**
les extrémités libres (451, 452) de l'arceau marginal (45) sont reliées l'une à l'autre par un bras de liaison (44) qui est monté pivotant sur le châssis (11) de la faucheuse (1) autour de l'axe de pivotement (450).

9. Faucheuse (1) selon la revendication 8,
**caractérisée en ce que**
un levier (42) pour basculer l'arceau marginal (45) est fixé au bras de liaison (44).

10. Faucheuse (1) selon la revendication 9,
**caractérisée en ce que**
le levier (42) est actionné automatiquement par un actionneur (40).

11. Faucheuse (1) selon l'une des revendications précédentes,
**caractérisée en ce que**
un ruban de maintien (5) est tendu entre l'arceau marginal (45) et l'arceau de maintien (41).

12. Train de travail comportant un véhicule de travail et une faucheuse (1) selon l'une des revendications précédentes,
**caractérisé en ce que**
le véhicule de travail comporte un moyen d'actionnement pour actionner l'actionneur (40).
